# FASCICULE DE BREVET EUROPEEN

(11) **EP 4 124 397 B1**
(45) Date de publication et mention de la délivrance du brevet: **11.10.2023**
(21) Numéro de dépôt: 22184272.7
(22) Date de dépôt: 12.07.2022
(51) Int. Cl.: B09B 3/00, A62D 3/36

(54) **PROCÉDÉ DE TRAITEMENT D'UNE MATIÈRE SOLIDE CONTENANT DE L'AMIANTE**
VERFAHREN ZUR BEHANDLUNG EINES ASBESTHALTIGEN FESTSTOFFS
METHOD FOR TREATING A SOLID MATERIAL CONTAINING ASBESTOS

(30) Priorité: 30.07.2021 FR 2108302
(43) Date de publication de la demande: 01.02.2023
(73) Titulaire: Valame, 59320 Hallennes Lez-Haubourdin (FR)
(72) Inventeur: LEPERS, Pierre-Emmanuel, 59110 LA MADELEINE (FR); PLESSIS, Marine, 59160 LOMME (FR); DELMAS, Michel, 31320 AUZEVILLE-TOLOSANE (FR)
(74) Mandataire: Renard, Emmanuelle

(56) Documents cités:
- WO-A1-2021/085792
- KR-A- 20130 114 396

## Description

### OBJET DE L'INVENTION

La présente invention concerne un procédé de traitement d'une matière solide contenant de l'amiante, comprenant la mise en contact de la matière solide broyée avec une solution aqueuse d'acide chlorhydrique à froid puis à chaud en utilisant deux paliers de chauffe.

### ARRIERE-PLAN DE L'INVENTION

L'amiante est un matériau formé de fibres de silicate essentiellement de chrysotile, un silicate de magnésium de formule Mg₃[Si₂O₅(OH)₄], qui a été massivement utilisé dans les années 70 à la fois comme renfort dans des composites et comme isolant dans le domaine de la construction. Son implication dans des cancers des voies respiratoires a entraîné son interdiction dans un certain nombre de pays et la mise en place de mesures spécifiques sur les chantiers de rénovation de bâtiments afin de protéger les personnels et d'assurer le traitement des déchets amiantés. Actuellement, la quasi-totalité des déchets issus des opérations de désamiantage sont enfouis.

Des recherches ont donc été menées afin de disposer d'un procédé de traitement des déchets amiantés (ou MPCA, pour Matériaux et Produits Contenant de l'Amiante) qui soit plus respectueux de l'environnement, en permettant leur traitement et en aboutissant à des résidus non-dangereux éventuellement valorisables.

Dans ce contexte, il a déjà été proposé de traiter des déchets amiantés, notamment à base de fibrociment ou de flocage d'amiante, à l'aide d'acide chlorhydrique afin de les décomposer et d'isoler notamment des sels métalliques et de la silice (EP 2 285 455 et FR2930892). Pour ce faire, les déchets amiantés sont généralement broyés en milieu humide avant d'être traités à l'aide d'acide chlorhydrique à température ambiante destiné à séparer l'amiante et les solides siliciques éventuellement présents (issus de l'argile constitutive du liant hydraulique) des constituants non amiantés et non siliciques, puis le solide amianté obtenu est filtré avant d'être remis en suspension, dans un réacteur de type malaxeur, dans une solution aqueuse d'acide chlorhydrique portée à reflux (à 70-1 10°C, typiquement 95°C) pendant plusieurs heures. Il est nécessaire d'équiper le réacteur d'un condenseur de grandes dimensions, adapté pour permettre la condensation et le recyclage de la totalité des vapeurs formées par le chauffage de la suspension, ce qui affecte nécessairement le coût de l'installation de mise en oeuvre de ce procédé. Par ailleurs, la formation de vapeurs acides entraîne une réduction de l'acidité du milieu qui est préjudiciable à la cinétique ou au rendement de la réaction, sauf à compenser la perte d'acide par l'ajout d'une quantité complémentaire de solution acide qui génère une surconsommation de produits chimiques. Enfin, les vapeurs d'acide ainsi formées se mélangent au dioxyde de carbone dégagé lors de la décomposition des composés carbonatés présents dans les déchets amiantés, ce qui complique le traitement ou la valorisation de ce gaz.

Il a également été observé que ce procédé n'était pas suffisamment flexible pour pouvoir traiter des types de MPCA très différents. Les MPCA sont en effet très variables et leur composition en composés carbonatés, généralement issus du liant qu'ils renferment, n'est souvent pas connue en raison de l'ancienneté de l'utilisation de ces matériaux et de l'absence de spécifications. Comme indiqué précédemment, ces composés carbonatés sont susceptibles de dégager du dioxyde de carbone et donc d'entraîner la formation de mousse lors du traitement de l'amiante par l'acide chlorhydrique.

Il serait donc utile de disposer d'un procédé permettant de limiter la formation de mousse et d'éliminer efficacement le dioxyde de carbone formé, dans des conditions nécessitant une moindre dépense énergétique et une quantité moindre de consommables chimiques, sans affecter sensiblement la cinétique de la réaction de décomposition de l'amiante.

En outre, le procédé décrit dans l'art antérieur ci-dessus intègre une étape consistant à isoler le solide amianté issu du traitement acide à froid avant de procéder au traitement acide à chaud. Cette étape nécessite ainsi l'évaporation du surnageant issu du premier traitement, puis une remise en suspension avant le second traitement, entraînant là encore une surconsommation de réactif (en l'occurrence, d'eau) et une dépense énergétique inutile.

De manière similaire, le document CA 2240082 décrit un procédé de traitement de résidus miniers issus de l'extraction d'amiante, afin de produire de la silice de haute surface spécifique. Ce procédé comprend une première étape de traitement de ces résidus préalablement broyés à l'aide d'une solution d'acide chlorhydrique à 70-80°C éventuellement suivie d'une étape de traitement à chaud à l'aide d'acide oxalique. Ce procédé souffre des mêmes écueils que celui décrit dans le document EP2285455. En outre, il n'est pas adapté au traitement de déchets amiantés complexes.

Il subsiste donc le besoin de disposer d'un procédé de traitement des déchets amiantés qui permette de surmonter les inconvénients des procédés décrits précédemment et qui puisse en particulier convertir à l'échelle industrielle des déchets amiantés en résidus non-dangereux, dans des conditions économiquement satisfaisantes et notamment en continu. WO2021/085792A montre un autre état de la technique connu.

### RESUME DE L'INVENTION

Les inventeurs ont démontré que l'objectif précité pouvait être atteint grâce à un procédé polyvalent, capable de traiter des déchets amiantés de composition chimique très variable, qui peut être mis en oeuvre en continu dans des conditions économiquement acceptables assurant une cinétique optimale de la réaction.

L'invention a ainsi pour objet un procédé de traitement d'une matière solide contenant de l'amiante, caractérisé en ce qu'il comprend les étapes successives suivantes :
(a) le broyage de la matière solide,
(b) la mise en contact de la matière solide broyée avec une solution aqueuse d'acide chlorhydrique, sous agitation, à une température comprise entre 5 et 40°C, de préférence de 20 à 30°C, de manière à obtenir une suspension,
(c) le chauffage de la suspension à une première température comprise entre 50 et 60 °C, de préférence entre 50 et 55 °C, pendant une durée allant de 20 minutes à 1 heure,
(d) le chauffage de la suspension à une seconde température comprise entre 70 et 100°C, de préférence entre 90 et 95°C, pendant une durée allant de 30 minutes à 1 heure, et
(e) le refroidissement de la suspension obtenue à l'étape (d).

### BREVE DESCRIPTION DES FIGURES

La Figure 1 est un schéma illustrant les différentes étapes du procédé selon l'invention.
La Figure 2 illustre la libération dans le temps du dioxyde de carbone par traitement d'une dalle de sol à l'aide d'une solution d'acide chlorhydrique à différentes températures.

### DESCRIPTION DETAILLEE

Le procédé selon l'invention vise à traiter de manière simple et économique, à l'échelle industrielle, une matière solide contenant de l'amiante. Par « matière solide contenant de l'amiante », on entend toute matière solide constituée par des, ou issue de, déchets amiantés renfermant de l'amiante et généralement en outre : des sels de calcium ou de l'oxyde de calcium, en particulier du calcaire ou du gypse ; des oxydes et/ou hydroxydes de fer, d'aluminium, de magnésium et/ou de calcium ; de la silice ; du carbonate de calcium ; de l'alumine ; et leurs mélanges. L'amiante peut être de la chrysotile, ou des amphiboles telles que l'amosite, la crocidolite, la trémolite-amiante, l'actinolite-amiante ou l'anthophyllite-amiante, de préférence de la chrysotile. Ces déchets amiantés peuvent ainsi être choisis notamment parmi des flocages d'amiante, des colles et enduits amiantés, des plaques ou dalles de couverture de sol, de murs ou de toit ou des tuyauteries, en particulier des conduites d'aération ou des conduites d'adduction ou d'évacuation d'eau, ainsi que des résidus d'extraction minière. L'un des principaux avantages du procédé selon l'invention est sa capacité à s'adapter au traitement de ces différents types de déchets, quelle que soit leur composition chimique. D'une manière générale, les déchets amiantés traités selon l'invention renferment de 5 à 20% en poids et plus généralement de 5 à 15% en poids d'amiante.

Les différentes étapes du procédé de désamiantage de ces déchets seront à présent décrites plus en détail.

Dans un premier temps, la matière solide amiantée est soumise à une étape de broyage. Cette étape de broyage peut être effectuée à l'aide de dispositifs sécurisés de broyage mécanique à sec connus en soi et placés en atmosphère confinée pour retenir les éventuelles poussières d'amiante à l'intérieur du dispositif, ou encore selon la technique du moulin humide afin de limiter la formation de poussières. De préférence, l'étape (a) de broyage consiste à réduire la taille du solide à une granulométrie inférieure ou égale à 10 mm, de préférence comprise entre 100 µm et 2 mm. La granulométrie obtenue peut être ajustée par le choix des mailles de la grille, dans le cas où on utilise un broyeur à marteaux, et/ou vérifiée par prélèvement d'un échantillon et mesurée par tamisage mécanique selon des techniques bien connues de l'homme du métier.

La matière solide broyée est ensuite mise en contact avec une solution aqueuse d'acide chlorhydrique, sous agitation, à une température comprise entre 5 et 40°C, et à pression atmosphérique, de manière à obtenir une suspension. On préfère que la solution d'acide chlorhydrique utilisée dans l'étape (b) renferme au moins 15% en poids, de préférence au moins 18% en poids, plus préférentiellement de 25 à 34% en poids d'acide chlorhydrique. La quantité de solution d'acide chlorhydrique est ajustée pour obtenir une suspension renfermant au plus 30% en poids de matière solide, de préférence de 10 à 20% en poids de matière solide.

Cette étape de traitement à froid peut comprendre une sous-étape de chauffage, notamment à 30-40°C, puis un maintien en température dans cette plage, ce palier de température pouvant avoir une durée de 10 à 40 minutes.

On procède ainsi à une attaque acide des constituants non siliciques du liant présent dans le déchet amianté. Cette étape de traitement à froid permet précisément de décomposer le déchet amianté en un solide amianté, de la silice (issue des liants hydrauliques éventuellement inclus dans le déchet amianté) et des chlorures métalliques. Les carbonates éventuellement présents dans le déchet amianté sont généralement partiellement décomposés à ce stade, selon la réaction suivante :

CaCO₃ + 2HCl -> CaCh + CO₂ + H₂O

CaO + 2HCl -> CaCl₂ + H₂O

Les sels métalliques valorisables, notamment de fer et d'aluminium, peuvent éventuellement être récupérés dans cette étape du procédé, notamment par ajustement du pH dans la plage de 5 à 7, par exemple à l'aide d'oxyde ou d'hydroxyde de calcium.

Le procédé selon l'invention comprend en outre avantageusement une étape intermédiaire d'ajout d'un agent anti-mousse, avant ou pendant l'ajout d'acide chlorhydrique à la matière solide broyée.

La suspension issue de l'étape (b) est ensuite soumise à un traitement acide à chaud par paliers, sans être préalablement filtrée. Le solide amianté issue de l'étape (b) se trouve donc sous forme de suspension ou de boue et non de poudre, contrairement à l'art antérieur, ce qui facilite son convoyage et ne nécessite pas de redispersion dans l'eau avant la mise en oeuvre de l'étape suivante, améliorant ainsi l'économie du procédé. A cette fin, la suspension est d'abord portée à une première température comprise entre 50 et 60 °C, de préférence entre 50 et 55°C, et maintenue à cette température pendant une durée allant de 20 minutes à 1 heure. Cette étape permet d'avancer significativement la décomposition des matières carbonatées en dioxyde de carbone et également d'initier la réaction de décomposition de l'amiante. On veillera dans cette étape à ne pas atteindre ou dépasser la température d'ébullition de la solution d'acide chlorhydrique. Pour ce faire, la concentration en acide chlorhydrique est mesurée pendant l'étape (c) et une solution aqueuse d'acide chlorhydrique est éventuellement ajoutée à la suspension, en quantité telle que la concentration en acide chlorhydrique ne dépasse pas 400 g/l.

Dans une forme d'exécution avantageuse, le procédé selon l'invention peut comprendre une étape supplémentaire de récupération du dioxyde de carbone généré dans l'étape (c).

La suspension issue de l'étape (c) est alors soumise à une étape de chauffe de finition, consistant à la porter à une seconde température comprise entre 70 et 100°C, de préférence de 90 à 95°C, et à la maintenir à cette température pendant une durée allant de 30 minutes à 1 heure. Cette étape permet d'achever la conversion de l'amiante en silice et de dissoudre les composés non siliciques de l'amiante sous forme de chlorures de fer et de magnésium, notamment. Elle peut être effectuée à une température allant jusqu'au point d'ébullition de la solution d'acide chlorhydrique. Pour ce faire, la concentration en acide chlorhydrique est mesurée pendant l'étape (d) et une solution aqueuse d'acide chlorhydrique est éventuellement ajoutée à la suspension, en quantité telle que la concentration en acide chlorhydrique ne dépasse pas 340 g/l, de préférence 250 g/L.

L'acide chlorhydrique non consommé dans l'étape (d) peut être recyclé vers l'étape (b) ou (c). Pour ce faire, il peut être extrait par évaporation / condensation sous pression réduite.

Les inventeurs ont observé que la mise en oeuvre des étapes successives de traitement acide à froid et de traitement à chaud par paliers, constituant les étapes (b) à (d) du procédé selon l'invention, permettait d'éliminer efficacement la mousse liée à la libération de dioxyde de carbone par certains déchets amiantés contenant des liants carbonatés, sans préjudice pour la cinétique de la réaction de décomposition de l'amiante et dans des conditions économiquement plus favorables que dans l'art antérieur. En outre, l'étape (c) permet également à d'éventuelles réactions parasites potentiellement exothermiques, liées à la complexité des déchets traités, de se dérouler dans des conditions de sécurité optimale et en particulier sans entraîner d'ébullition de la solution d'acide chlorhydrique et donc de dégagement de vapeurs toxiques.

A l'issue de l'étape (d), la suspension obtenue est refroidie, par exemple à une température comprise entre 25 et 80°C, par exemple de 25 à 60°C.

On peut ensuite procéder à une filtration de la suspension refroidie, de manière à obtenir une fraction liquide renfermant des chlorures métalliques, notamment de magnésium et de fer, et une fraction solide contenant notamment de la silice de haute surface spécifique (entre 150 et 300 m²/g) et qui est donc valorisable. La fraction solide peut en outre renfermer des matières plastiques, telles que du PVC, en particulier lorsque le déchet amianté est une dalle de sol en vinyle-amiante.

La fraction liquide peut alors être éventuellement traitée de manière à isoler les sels métalliques qu'elle contient, comme décrit dans la demande EP2285455. A cette fin, on ajuste en général dans l'étape (g) le pH de la fraction liquide à une valeur allant de 5 à 7, avantageusement au moyen d'hydroxyde de magnésium ou de calcium, de manière à séparer les sels de fer des sels de magnésium ou de calcium, respectivement. Ces sels métalliques peuvent eux-mêmes être valorisés, par exemple au moyen de l'électrolyse pour ce qui est des sels de magnésium, et dans le domaine du traitement de l'eau, pour ce qui concerne les sels de fer.

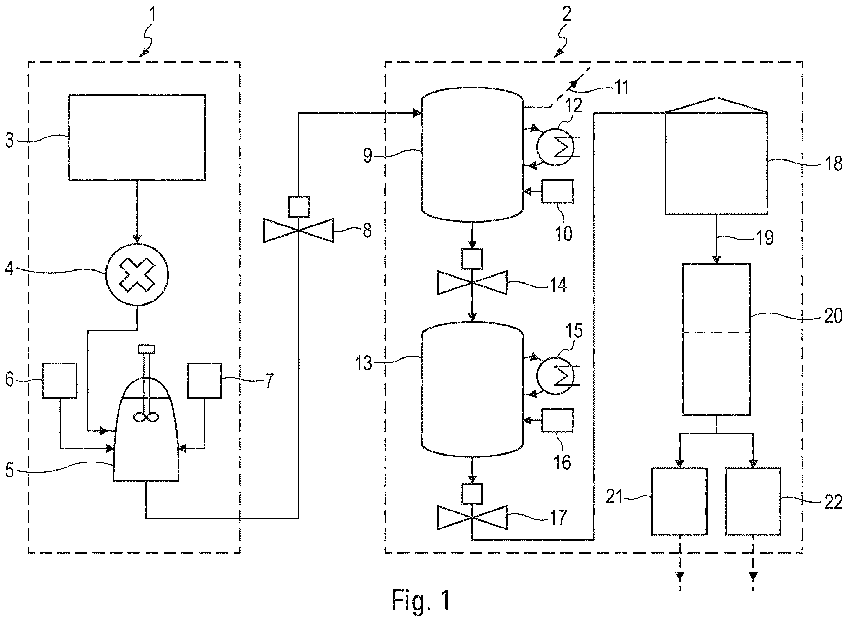

La Figure 1 est un schéma illustrant les différentes étapes du procédé selon une forme d'exécution de l'invention, ainsi que l'installation pouvant être utilisée pour mettre en oeuvre ce procédé.

Typiquement, cette installation comprend deux bâtiments distincts, à savoir le bâtiment 1 dédié aux étapes (a) et (b) et le bâtiment 2 dédié aux étapes subséquentes.

Dans le bâtiment 1, après réception, déconditionnement et tri des matériaux (ou solides amiantés) à traiter au niveau du poste 3, ceux-ci sont acheminés vers un dispositif de broyage 4 de réduire leur taille à moins de 10 mm et typiquement à moins de 2 mm, plus préférentiellement à 1,5 mm au maximum. Dans cette étape, il est possible d'utiliser des broyeurs à sec ou en milieu humide, ces derniers étant préférés pour des questions de sécurité. On peut également utiliser plusieurs broyeurs en série, notamment une cascade de broyeurs à marteaux, en fonction de la granulométrie visée. Les solides amiantés broyés sont alors transférés vers un réacteur 5 qui est constitué d'un malaxeur ou d'un autre type de mélangeur liquide/solide. Le réacteur 5 est alimenté par une solution d'acide chlorhydrique 6 et par une solution d'un agent anti-mousse 7, tel qu'un ester d'acide gras, qui est de préférence biodégradable. L'utilisation d'un agent anti-mousse permet, en limitant la formation de mousse, de réduire le volume nécessaire pour le réacteur 5.

Une alimentation connectée au réacteur 5 permet de transférer la suspension issue du traitement acide à froid, via une électrovanne 8, vers le bâtiment 2 et précisément dans un réacteur 9. Le réacteur 5 est généralement alimenté en continu et vidangé partiellement une fois le volume maximal prévu (par exemple de 10 m³) atteint, afin de remplir le réacteur 9 (par exemple jusqu'à 5 m³), puis le réacteur 5 est rempli à nouveau jusqu'à son volume initial. De son côté, le réacteur 9 est équipé d'une alimentation en acide chlorhydrique via le réservoir 10 et est pourvu d'un échangeur de chaleur 12 résistant à la corrosion, dans lequel le milieu réactionnel est mis en circulation afin de le porter à la température voulue. Des moyens (non représentés) sont par ailleurs prévus pour mesurer le pH ou la conductivité du milieu et donc évaluer la concentration en acide chlorhydrique du milieu réactionnel afin de commander en conséquence l'introduction d'acide chlorhydrique depuis le réservoir 10. Le CO2 dégagé lors de la réaction mise en oeuvre dans le réacteur 9 est récupéré via la conduite 11.

La suspension traitée par l'acide chlorhydrique à chaud dans le premier réacteur 9 alimente ensuite le réacteur 13 après un temps de séjour donné qui est ajusté par l'électrovanne 14. Le temps de séjour dans le réacteur 9 peut ainsi être compris entre 30 minutes et une heure. Une fois le réacteur 9 vidé, il peut être utile de prévoir un temps de pause de quelques minutes avant de le remplir à nouveau, par déclenchement de l'électrovanne 8.

Le réacteur 13 est également équipé d'un échangeur de chaleur 15 et d'une alimentation en acide chlorhydrique via le réservoir 16. Des moyens (non représentés) sont par ailleurs prévus pour mesurer le pH ou la conductivité du milieu et donc évaluer la concentration en acide chlorhydrique du milieu réactionnel afin de commander en conséquence l'introduction d'acide chlorhydrique depuis le réservoir 16.

La suspension traitée par l'acide chlorhydrique à chaud dans le second réacteur 13 alimente ensuite une cuve tampon 18 après un temps de séjour donné qui est ajusté par l'électrovanne 17. Le temps de séjour dans le réacteur 13 peut ainsi être compris entre 30 minutes et une heure. Une fois le réacteur 13 vidé, il peut être utile de prévoir un temps de pause de quelques minutes avant de le remplir à nouveau, par déclenchement de l'électrovanne 14.

La cuve tampon 18 permet un refroidissement naturel du milieu réactionnel et peut en variante être remplacée par des tubes de refroidissement (non représentés).

Une conduite 19 permet ensuite d'amener la suspension refroidie vers un dispositif de filtration 20 qui permet la séparation d'un surnageant, alimentant un réservoir 21, d'un résidu qui alimente le réservoir 22.

Il est bien entendu que l'installation représentée à la Figure 1 ne constitue qu'un mode de réalisation de l'invention et que différentes variantes sont envisageables. Notamment, les réacteurs 9 et 13 pourraient être remplacés par un unique réacteur. Cette solution n'est toutefois pas préférée, dans la mesure où elle affecte négativement la productivité et nécessite un réacteur de volume plus important. En outre, les échangeurs de chaleur pourraient être remplacés par d'autres dispositifs de chauffage. L'homme du métier saura également ajuster le dimensionnement des réacteurs 5, 9 et 13, le débit et le rythme d'ouverture des électrovannes 8, 14 et 17 afin de garantir les temps de séjour voulus et la continuité de traitement des déchets amiantés.

Dans le cas où on utilise un réacteur 5 ayant un volume utile de 40 m³ et des réacteurs 9 et 13 ayant chacun un volume utile de 10 m³, l'installation illustrée à la Figure 1 permet de traiter jusqu'à 2 tonnes/heure de déchets amiantés.

### EXEMPLES

L'invention sera mieux comprise à la lumière des exemples suivants, qui sont donnés à titre purement illustratif et n'ont pas pour but de limiter la portée de l'invention, définie par les revendications annexées.

### Exemple 1 : Influence de la température de la première étape de traitement à chaud

Le procédé selon l'invention a été mis en oeuvre sur des dalles de sol renfermant environ 60% en poids de charge minérale.

Précisément, le matériau a été broyé dans un broyeur à marteaux, puis tamisé afin d'écarter les grains de taille supérieure à 1,8 mm.

Dans un erlenmeyer 250 mL, 50 g de dalles de sol broyées et tamisées ont ensuite été mélangés à 50 g d'eau, afin d'homogénéiser le milieu en vue de l'ajout d'acide chlorhydrique.

Quelques gouttes d'anti-mousse biodégradable ont également été ajoutées pour empêcher la mousse qui sera formée de tenir et ainsi augmenter la vitesse d'ajout de l'acide chlorhydrique.

125 mL d'acide chlorhydrique, concentré à 18,5% massique, ont alors été ajoutés progressivement à la solution sous agitation magnétique. Toute la solution acide a été introduite en 10 minutes. On a observé un échauffement du milieu réactionnel dont la température est montée à 30°C environ. A la fin de l'addition d'acide, le milieu a été chauffé à différentes températures :
- Sans apport de chaleur
- Palier à 50°C
- Palier à 70°C

La masse de CO₂ dégagée a été mesurée afin de comparer l'avancement de la réaction pour ces différentes températures. Pour ce faire, le réacteur a été pesé à la fin de l'ajout d'acide (10 minutes) et toutes les 5 minutes pendant 45 minutes. Une des suspensions ayant servi pour les tests a été laissée à température ambiante pendant 72h, la masse de CO₂ dégagée a été considérée comme la masse de CO₂ atteinte pour une réaction totale. Cette masse était de 13,68 g. Le pourcentage de CO₂ dégagé à chacune des températures testées a donc été calculé par rapport à cette masse de 13,68 g. On a observé que plus de 60% du CO2 s'était formé au bout des 10 min d'ajout de l'acide.

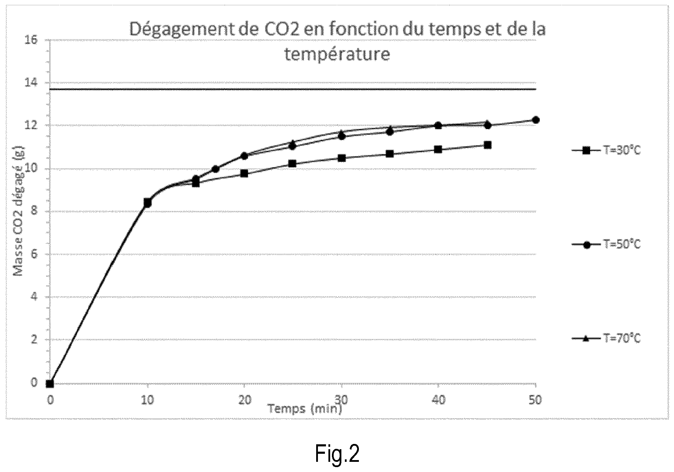

Il ressort de la Figure 2 que le chauffage du milieu réactionnel à 50 ou 70°C permet d'accélérer la réaction de décomposition de la charge minérale, et donc la formation de CO2, puisque la quantité de CO2 dégagé sans apport de chaleur au bout de 45 min est dépassée après seulement 25 min de chauffage à 50 ou 70°C. En outre, on observe sur la Figure 2 que les pentes obtenues pour les deux paliers de chauffe à 50°C et 70°C ne se distinguent que très peu. Après 40 minutes de réaction, la masse de CO₂ dégagée est de 12 grammes dans les deux cas. Le chauffage à 70°C n'est donc pas plus efficace qu'à 50°C.

Ainsi, il apparaît de manière surprenante que la réaction de décomposition de la charge minérale des dalles amiantées peut être réalisée avec succès à 50°C seulement, ce qui présente plusieurs avantages :
- la température du palier est atteinte plus rapidement,
- l'énergie à déployer pour atteindre cette température est moins importante,
- à 50°C le CO₂ entraînera moins d'acide lors de son dégagement, de sorte que la grande majorité de l'acide restera en phase liquide pour la réaction de décomposition de l'amiante qui sera effectuée ensuite et que le CO2 dégagé sera plus facilement traité.

### Exemple 2 : Analyse des produits issus de la seconde étape de traitement à chaud

Un échantillon de 100 g de dalle de sol amiantée a été broyé dans un broyeur à couteaux puis le broyat obtenu a été tamisé sur un tamis de 500 microns. 100 g du tamisat obtenu ont été introduits dans un réacteur agité en y incorporant 100 g d'eau et peu à peu 220 g d'acide chlorhydrique à 18,5%, ce qui a eu pour effet de dégager du CO2 et de produire de la mousse qui a été abattue par ajout de quelques gouttes d'anti-mousse. A l'issue de ce traitement à froid, le pH était d'environ 2. De l'acide chlorhydrique à 18,5% (60 g) a été ajouté, puis le milieu réactionnel a été placé sous agitation pendant 1 heure à la température de 90° - 100° afin de traiter à chaud l'échantillon pour finir de déstructurer l'amiante. Après refroidissement, le milieu réactionnel a été filtré, puis le gâteau a été rincé à l'eau, séché et pesé. On a ainsi récupéré 36 g de solide et une phase aqueuse acide de couleur jaune.

Le gâteau a été analysé au microscope électronique à transmission et les trois critères de la norme NFX 43-050 ont été évalués, à savoir la morphologie, la diffraction et la composition des fibres : il a été démontré que ce gâteau ne contenait pas de fibres d'amiante.

De son côté, la phase aqueuse acide a été ramenée à un pH sensiblement neutre. Le précipité obtenu a été filtré puis pesé (4,5 g) après séchage. Il a été confirmé qu'il renfermait des oxydes et hydroxydes de fer.

La phase aqueuse débarrassée des composés du fer était incolore et il a été déterminé qu'elle ne contenait que du chlorure de calcium et de magnésium (55-60 g).

Il a ainsi été mis en évidence que le chauffage en milieu acide d'un déchet amianté préalablement débarrassé du dioxyde de carbone formé lors de son traitement à froid permettait de convertir totalement l'amiante en sous-produits non dangereux et ce, à une température inférieure à la température de reflux du milieu réactionnel.

### Exemple 3 : Procédé de traitement d'un déchet amianté par paliers

54 kg de dalles de sol amiantées ont été broyées dans un premier broyeur à rotors dentés type ER150x600 fourni par MECAROANNE, et un second broyeur à marteaux BM600x600 également fourni par MECAROANNE, équipé d'une grille présentant des ouvertures de 1,5 mm. On a ensuite introduit dans un réacteur un mélange à 15°C constitué de : 386 L d'eau, 114 L d'acide chlorhydrique (2,76 % mol) et 350 mL d'agent anti-mousse (Caldefoam 700 de CALDIC). Le réacteur a été préchauffé à 35°C, par ajout de vapeur à 110°C dans le milieu réactionnel, avant d'y introduire la poudre issue du broyeur sous agitation, en deux fois. La concentration en acide a alors été ajustée par ajout de 40 L d'acide chlorhydrique (20% en poids) au milieu réactionnel, qui a ensuite été porté à 50°C et maintenu à cette température pendant 20 minutes. La température a alors été portée à 95°C et maintenue à cette valeur pendant une heure, puis le milieu réactionnel a été refroidi par ajout de 125 L d'eau à 14°C, de manière à atteindre une température de 75°C. Le réacteur a ensuite été vidangé et le milieu réactionnel filtré à l'aide d'un filtre-presse. Le filtrat et le résidu ont été récupérés puis analysés en vue de vérifier l'absence de fibres d'amiante.

Pour ce faire, le résidu solide a été analysé au microscope électronique à lumière polarisée (MOLP) selon le Guide HSG 248 (annexe 2) et la norme NF ISO 22262-1 (parties utiles) : il a été démontré que ce résidu ne contenait pas de fibres d'amiante. Ce résultat a été confirmé par une analyse au microscope électronique à transmission analytique (META), permettant d'évaluer les trois critères de la norme NFX 43-050, à savoir la morphologie, la diffraction et la composition des fibres.

De son côté, le filtrat a été analysé conformément à la norme NF EN 872, afin de doser les matières en suspension, puis celles-ci ont été soumises à une calcination suivie d'une attaque acide en vue d'identifier les fibres au microscope électronique à transmission conformément à la norme NFX 43-050. Il n'a pas été détecté de fibres d'amiante.

Ce procédé par paliers permet ainsi de décomposer totalement la charge minérale présente dans les dalles amiantées (en suivant sa dégradation au moyen d'un dosage de la consommation d'acide), tout en maîtrisant la mousse produite, et de détruire entièrement l'amiante, dans des conditions économiquement favorables.

## Revendications

1. Procédé de traitement d'une matière solide contenant de l'amiante, comprenant les étapes successives suivantes :
(a) le broyage de la matière solide,
(b) la mise en contact de la matière solide broyée avec une solution aqueuse d'acide chlorhydrique, sous agitation, de manière à obtenir une suspension, **caractérisé par** la mise en contact à une température comprise entre 5 et 40°C, de préférence entre 20 et 30°C, et par les étapes suivantes:
(c) le chauffage de la suspension à une première température comprise entre 50 et 60 °C, de préférence entre 50 et 55°C, pendant une durée allant de 20 minutes à 1 heure,
(d) le chauffage de la suspension à une seconde température comprise entre 70 et 100°C, de préférence entre 90 et 95°C, de pendant une durée allant de 30 minutes à 1 heure, et
(e) le refroidissement de la suspension obtenue à l'étape (d).

2. Procédé selon la revendication 1, **caractérisé en ce que** l'étape (a) de broyage consiste à réduire la taille du solide à une granulométrie inférieure ou égale à 10 mm, de préférence comprise entre 100 µm et 2 mm.

3. Procédé selon la revendication 1 ou 2, **caractérisé en ce que** la solution d'acide chlorhydrique utilisée dans l'étape (b) renferme au moins 15% en poids, de préférence au moins 18% en poids, plus préférentiellement de 25 à 34% en poids d'acide chlorhydrique.

4. Procédé selon l'une quelconque des revendications 1 à 3, **caractérisé en ce que** la quantité de solution d'acide chlorhydrique est ajustée dans l'étape (b) pour obtenir une suspension renfermant au plus 30% en poids de matière solide, de préférence de 10 à 20% en poids de matière solide.

5. Procédé selon l'une quelconque des revendications 1 à 4, **caractérisé en ce que** la concentration en acide chlorhydrique est mesurée pendant l'étape (c) et une solution aqueuse d'acide chlorhydrique est éventuellement ajoutée à la suspension, en quantité telle que la concentration en acide chlorhydrique ne dépasse pas 400 g/l.

6. Procédé selon l'une quelconque des revendications 1 à 5, **caractérisé en ce qu'**il comprend une étape supplémentaire de récupération du dioxyde de carbone généré dans l'étape (c).

7. Procédé selon l'une quelconque des revendications 1 à 6, **caractérisé en ce que** la concentration en acide chlorhydrique est mesurée pendant l'étape (d) et une solution aqueuse d'acide chlorhydrique est éventuellement ajoutée à la suspension, en quantité telle que la concentration en acide chlorhydrique ne dépasse pas 340 g/l, de préférence 250 g/L.

8. Procédé selon l'une quelconque des revendications 1 à 7, **caractérisé en ce que** la matière solide est issue de déchets amiantés renfermant également: des sels de calcium ou de l'oxyde de calcium, en particulier du calcaire ou du gypse ; des oxydes et/ou hydroxydes de fer, d'aluminium, de magnésium et/ou de calcium ; de la silice ; du carbonate de calcium ; de l'alumine ; et leurs mélanges.

9. Procédé selon la revendication 8, **caractérisé en ce que** lesdits déchets sont choisis parmi des flocages d'amiante, des colles et enduits amiantés, des plaques ou dalles de couverture de sol, de murs ou de toit ou des tuyauteries, en particulier des conduites d'aération ou des conduites d'adduction ou d'évacuation d'eau.

10. Procédé selon l'une quelconque des revendications 1 à 9, **caractérisé en ce que** la suspension est refroidie dans l'étape (e) à une température comprise entre 25 et 60°C.

11. Procédé selon l'une quelconque des revendications 1 à 10, **caractérisé en ce que** l'acide chlorhydrique non consommé dans l'étape (d) est recyclé vers l'étape (b) ou (c).

## Patentansprüche

1. Verfahren zur Behandlung eines Feststoffs, der Asbest enthält, wobei es nacheinander die folgenden Schritte umfasst:
(a) Zerkleinern des Feststoffs,
(b) Inkontaktbringen des zerkleinerten Feststoffs mit einer wässrigen Lösung von Salzsäure, unter Rühren, sodass eine Suspension erhalten wird, **dadurch gekennzeichnet, dass** das Inkontaktbringen bei einer Temperatur im Bereich von 5 bis 40 °C, vorzugsweise von 20 bis 30 °C erfolgt, und durch die folgenden Schritte:
(c) Erwärmen der Suspension auf eine erste Temperatur im Bereich von 50 bis 60 °C, vorzugsweise von 50 bis 55 °C, während einer Dauer, die zwischen 20 Minuten und 1 Stunde beträgt,
(d) Erwärmen der Suspension auf eine zweite Temperatur im Bereich von 70 bis 100 °C, vorzugsweise von 90 bis 95 °C, während einer Dauer, die zwischen 30 Minuten und 1 Stunde beträgt, und
(e) Abkühlen der Suspension, welche in Schritt (d) erhalten wurde.

2. Verfahren nach Anspruch 1, **dadurch gekennzeichnet, dass** der Schritt (a) des Zerkleinern darin besteht, die Abmessungen des Feststoffs zu verringern, bis eine Korngröße von höchstens 10 mm erreicht ist, wobei diese vorzugsweise im Bereich von 100 µm bis 2 mm liegt.

3. Verfahren nach Anspruch 1 oder 2, **dadurch gekennzeichnet, dass** die Salzsäurelösung, welche in Schritt (b) verwendet wird, mindestens 15 Gewichts-%, vorzugsweise mindestens 18 Gewichts-%, stärker bevorzugt 25 bis 34 Gewichts-% an Salzsäure beinhaltet.

4. Verfahren nach einem beliebigen der Ansprüche 1 bis 3, **dadurch gekennzeichnet, dass** die Menge an Salzsäurelösung im Schritt (b) derart eingestellt wird, dass eine Suspension erhalten wird, die höchstens 30 % Gewichts-% an Feststoff, vorzugsweise 10 bis 20 Gewichts-% an Feststoff beinhaltet.

5. Verfahren nach einem beliebigen der Ansprüche 1 bis 4, **dadurch gekennzeichnet, dass** die Konzentration an Salzsäure während des Schrittes (c) gemessen wird und der Suspension gegebenenfalls eine wässrige Salzsäurelösung in einer derartigen Menge zugesetzt wird, dass die Konzentration an Salzsäure 400 g/l nicht überschreitet.

6. Verfahren nach einem beliebigen der Ansprüche 1 bis 5, **dadurch gekennzeichnet, dass** es einen zusätzlichen Schritt des Zurückgewinnens von Kohlendioxid umfasst, welches im Schritt (c) entsteht.

7. Verfahren nach einem beliebigen der Ansprüche 1 bis 6, **dadurch gekennzeichnet, dass** die Konzentration an Salzsäure während des Schrittes (d) gemessen wird und der Suspension gegebenenfalls eine wässrige Salzsäurelösung in einer derartigen Menge zugesetzt wird, dass die Konzentration an Salzsäure 340 g/l, vorzugsweise 250 g/L, nicht überschreitet.

8. Verfahren nach einem beliebigen der Ansprüche 1 bis 7, **dadurch gekennzeichnet, dass** der Feststoff aus asbesthaltigen Abfällen hervorgeht, die weiterhin Folgendes beinhalten: Calciumsalze oder Calciumoxid, insbesondere Kalk oder Gips; Oxide und/oder Hydroxide von Eisen, Aluminium, Magnesium und/oder Calcium; Siliciumdioxid; Calciumcarbonat; Aluminiumoxid; und deren Mischungen.

9. Verfahren nach Anspruch 8, **dadurch gekennzeichnet, dass** die Abfälle aus Asbestflocken, asbesthaltigen Klebstoffen und Beschichtungen, Platten oder Fliesen zur Verkleidung des Bodens, von Wänden oder Dächern oder von Rohrleitungen, insbesondere von Belüftungsleitungen oder Leitungen zur Wasserversorgung oder -entsorgung ausgewählt sind.

10. Verfahren nach einem beliebigen der Ansprüche 1 bis 9, **dadurch gekennzeichnet, dass** die Suspension im Schritt (e) auf eine Temperatur im Bereich von 25 bis 60 °C abgekühlt wird.

11. Verfahren nach einem beliebigen der Ansprüche 1 bis 10, **dadurch gekennzeichnet, dass** die Salzsäure, welche im Schritt (d) nicht verbraucht wurde, zum Schritt (b) oder (c) zurückgeführt wird.

## Claims

1. Process for treating a solid material containing asbestos, comprising the following successive steps:
a) grinding the solid material,
(b) bringing the ground solid material into contact with an aqueous solution of hydrochloric acid, with stirring, so as to obtain a suspension, **characterized in that** the material is brought into contact at a temperature of between 5 and 40°C, preferably between 20 and 30°C, and by the following steps:
(c) heating the suspension to a first temperature comprises between 50 and 60°C, preferably between 50 and 55°C, for a period of time ranging from 20 minutes to 1 hour,
(d) heating the suspension to a second temperature comprised between 70 and 100°C, preferably between 90 and 95°C, for a period of time ranging from 30 minutes to 1 hour, and
(e) cooling the suspension obtained in step (d).

2. Process according to claim 1, **characterized in that** step (a) of grinding consists in reducing the size of the solid to a particle size less than or equal to 10 mm, preferably between 100 µm and 2 mm.

3. Method according to claim 1 or 2, **characterized in that** the hydrochloric acid solution used in step (b) contains at least 15% by weight, preferably at least 18% by weight, more preferably from 25 to 34% by weight of hydrochloric acid.

4. Method according to any one of claims 1 to 3, **characterized in that** the amount of hydrochloric acid solution is adjusted in step (b) to obtain a suspension containing at most 30% by weight of solid matter, preferably from 10 to 20% by weight of solid matter.

5. Method according to any one of claims 1 to 4, **characterized in that** the hydrochloric acid concentration is measured during step (c) and an aqueous solution of hydrochloric acid is optionally added to the suspension, in an amount such that the hydrochloric acid concentration does not exceed 400 g/l.

6. Method according to any one of claims 1 to 5, **characterized in that** it comprises an additional step of recovering the carbon dioxide generated in step (c).

7. Method according to any one of claims 1 to 6, **characterized in that** the hydrochloric acid concentration is measured during step (d) and an aqueous solution of hydrochloric acid is optionally added to the suspension, in an amount such that the hydrochloric acid concentration does not exceed 340 g/l, preferably 250 g/L.

8. Method according to any one of claims 1 to 7, **characterized in that** the solid material is derived from asbestos waste also containing: calcium salts or calcium oxide, in particular limestone or gypsum; oxides and/or hydroxides of iron, aluminum, magnesium and/or calcium; silica; calcium carbonate; alumina; and their mixtures.

9. Method according to claim 8, **characterized in that** said waste is chosen from asbestos flocking, asbestos-containing adhesives and coatings, plates or slabs of ground cover, of walls or of roof or pipes, in particular ventilation ducts or water supply or discharge ducts.

10. Process according to any one of claims 1 to 9, **characterized in that** the suspension is cooled in step (e) to a temperature between 25 and 60°C.

11. Method according to any one of claims 1 to 10, **characterized in that** the hydrochloric acid not consumed in step (d) is recycled to step (b) or (c).
